# EUROPÄISCHE PATENTSCHRIFT

(11) **EP 0 868 404 B1**
(45) Veröffentlichungstag und Bekanntmachung des Hinweises auf die Patenterteilung: **15.09.1999**
(21) Anmeldenummer: 96943910.8
(22) Anmeldetag: 11.12.1996
(51) Int. Cl.: C03B 5/027

(54) **DREHBARER WIDERSTANDSSCHMELZOFEN**
ROTARY RESISTANCE MELTING FURNACE
FOUR ROTATIF DE FUSION PAR RESISTANCE

(30) Priorität: 21.12.1995 DE 19548027
(43) Veröffentlichungstag der Anmeldung: 07.10.1998
(73) Patentinhaber: BAYER AG, 51368 Leverkusen (DE)
(72) Erfinder: LEFEVERE, Luc, B-8310 Sint-Kruis (BE)
(74) Vertreter: Jönsson, Hans-Peter, Dr.Dipl.-Chem.
(86) Internationale Anmeldenummer: EP9605516
(87) Internationale Veröffentlichungsnummer: WO9723419

(56) Entgegenhaltungen:
- EP-A- 0 019 645
- EP-A- 0 357 053
- DE-A- 2 151 896
- DE-A- 3 824 829
- US-A- 2 008 495
- US-A- 2 250 155

## Beschreibung

Die Erfindung betrifft einen elektrischen Widerstandsschmelzofen für verglasbare Zusammensetzungen, wie Glas, Email oder Keramik.

In der Glas-, Email- oder Keramikindustrie werden zum Schmelzen von verglasbaren Zusammensetzungen verschiedene Typen von Heizöfen eingesetzt, die sich u.a. durch die eingesetzte Energieform unterscheiden. Es werden z.B. nebeneinander gasbeheizte oder elektrobeheizte Öfen eingesetzt, deren jeweilige Wirtschaftlichkeit durch ihren Energieverbrauch, durch ihre Abgasmenge und -zusammensetzung sowie durch ihre Flexibilität im Hinblick auf einen Produktwechsel bestimmt ist. Die bekannten Öfen erfüllen bislang immer nur ausgewählte Kriterien bezogen auf einen engen Kreis von zu behandelnden Produkten.

Es besteht aber Interesse an einem Ofentyp, der einen häufigen Produktwechsel ermöglicht, wobei der Rohstoffverlust gering gehalten sein sollte, der andererseits aber auch flexible Betriebsbedingungen ermöglicht, die wiederum die Verarbeitung einer breiten Produktpalette möglich macht.

Grundsätzlich werden bei der Verglasung von Rohstoffen Schmelzofentypen nach der Art der Energiezuführung unterschieden. So sind Öfen mit Strahlungsheizung durch Flammen oder elektrische Strahlungselemente bekannt geworden oder solche, die mit einer Direktbeheizung durch eine Flammenheizung arbeiten (siehe z.B. Europäische Offenlegungsschrift EP-A-71 110).

Öfen wie in EP-A-71 110 beschrieben nutzen eine Gemengeschicht an den Ausmauerungen um eine thermische Schädigung der Ausmauerung durch die Flammen zu vermeiden.

Da sich aufgrund von Lücken in der äußeren Gemengelage und der thermischen Belastung bei den genannten Typen von Öfen trotz seiner vertikalen Drehbarkeit Schädigungen der Ausmauerung nicht verhindern lassen, wird in neueren. Entwicklungen zusätzlich besonderer Aufwand für eine gesonderte Kühlung oder eine feuerfeste Ausmauerung betrieben (siehe z.B. EP-B1-231 516).

Die EP-A1-0019 645 betrifft einen elektrisch beheizten Schmelzofen für aggressive Mineralstoffe mit steilen Vikositätskurven, insbesondere bestehend aus einem Gemisch von Flugasche und Kalk sowie möglicherweise Sand für die Zementherstellung, mit einem von einem Stützgerüst (2) erhaltenem Mauerwerk (1) aus feuerfestem Material, welches sich um eine vertikale Achse dreht, falls nicht die Ofendecke (16) drehbar ausgebildet ist mit Elektroden (5) zur Einleitung von elektrischer Energie in die Schmelze (3) sowie Mitteln zum Auflegen des Gemenges auf die Schmelze (3), wobei die Elektroden (5) mit erheblicher Länge in die Schmelze (3) ragen und der Ofen einen Grundriß in Form eines Kreises oder regelmäßigen Vielecks mit hoher Eckenzahl aufweist und weiterhin in der Wannenmitte ein mit einem Mitteldurchlaß (7) versehener Auslaß (6) angeordnet ist, der nach oben in die Schmelze (3) ragt und dessen Auslaufoberkante sich bis dicht unter die Badoberfläche erstreckt.

Von den elektrobeheizten Schmelzöfen haben besonders solche mit Widerstandsheizung, FLammenbogenheizung oder mit Induktionsheizung Bedeutung erlangt. Ein elektrischer Widerstandsschmelzofen ist z.B. in der DE-A1-38 24 829 beschrieben worden. Die DE-A1-38 24 829 beschreibt einen elektrischen Widerstandsofen mit den Merkmalen des Oberbegriffs des Anspruchs 1.

Elektrische Widerstandsöfen und ähnliche Ofentypen können mit offenem Schmelzbad oder auch mit von festen Rohstoffen bedecktem Schmelzbad, einer sogenannten "Cold Top"-Abdeckung, betrieben werden. Die mit Rohstoff abgedeckten Schmelzwannen bedingen eine aufwendige Rohstoffeinlegemaschine um einen gleichmäßigen Aufbau der Rohstoffbedeckung zu gewährleisten.

Die bekannten elektrischen Widerstandsschmelzöfen haben eine stationäre Wanne mit fest angeordneten Heizelektroden und sind hinsichtlich ihres Aufbaus und ihrer Geometrie auf ein bestimmtes Produkt optimiert. Solche Öfen sind in der Regel für einen langfristigen kontinuierlichen Betrieb ohne Produktumstellung gedacht.

Aufgabe der Erfindung war es, einen Ofentyp zu entwickeln, der wie beschrieben, unabhängiger von einem bestimmten Produkttyp arbeitet. Der Ofen sollte als Widerstandsschmelzofen arbeiten und den genannten "Cold Top"-Betrieb ermöglichen, wobei die Schmelzwanne und der Oberofen bei fortgeschrittenem Verschleiß mit geringem Arbeitsaufwand gewechselt werden kann.

Die Aufgabe wird erfindungsgemäß gelöst durch einen elektrischen Widerstandsschmelzofen für verglasbare Zusammensetzungen, der wenigstens eine Schmelzwanne, einen stationären Oberofen, Deckenelektroden, einen Kaminanschluß, einen Vorerhitzer für das Schmelzgut, eine Eintragseinheit und einen Auslaß für die Schmelze aufweist und dadurch gekennzeichnet ist, daß die Schmelzwanne um eine vertikale Achse drehbar gelagert ist und daß Oberofen und Schmelzwanne voneinander in vertikaler Richtung trennbar sind.

Durch die Trennbarkeit von Schmelzwanne und Oberofen kann die Wanne bei fortgeschrittenem Verschleiß mit geringem Arbeitsaufwand gewechselt werden.

Die Schmelzwanne weist insbesondere einen Bodenablaß auf, über den die Badtiefe und die Auslaufgeschwindigkeit der Schmelze geregelt werden kann. Der Bodenablaß ist bevorzugt am tiefsten Punkt der Wanne gelegen. Bevorzugt sind alle weiteren notwendigen Anschlüsse wie Elektroden, Eintragseinheit oder Kaminanschluß am stationären Oberofen angebracht.

In einer bevorzugten weiteren Ausführungsform ist die Eintragseinheit als Förderschnecke ausgebildet, deren Förderende radial zur Drehachse der Schmelzwanne beweglich ist. Diese Eintragseinheit ermöglicht zusammen mit der Rotation der Schmelzwanne eine geschlossene Gemengedecke über dem Schmelzebad. Bereiche mit größerer Abschmelzgeschwindigkeit bei "Cold Top"-Abdeckung können auf diese Weise gezielt mit mehr Ausgangsgemenge befüllt werden um die Schmelzeabdeckung zu vergleichmäßigen.

Bevorzugt sind die Elektroden des Schmelzeofens jeweils um eine vertikale Achse schwenkbar ausgeführt. Dadurch wird der Abstand der Elektroden untereinander oder auch der Abstand zur Ofenwand im laufenden Betrieb einstellbar.

Die Elektroden sind insbesondere in vertikaler Richtung beweglich gestaltet und können aus dem Schmelzofen herausgezogen werden. Diese Variante des erfindungsgemäßen Schmelzofens ermöglicht einerseits eine Anpassung der Eintauchtiefe der Elektroden zueinander. Andererseits kann die gesamte Elektrodengruppe gegebenenfalls auch bei laufendem Betrieb aus dem Schmelzofen gezogen werden um eine Wartung oder einen Wechsel einzelner Elektroden zu ermöglichen.

Eine besonders bevorzugte Ausführungsform der Erfindung weist oberhalb des Oberofens eine hochtemperaturbeständige Kammer mit eventueller Inertgasflutung auf. In diese Kammer können heiße Elektroden bei einem Produktwechsel zum Schutz vor Korrosion, z.B. durch Umgebungsluft, zurückgezogen werden. Die Kammer wird gegebenenfalls mit Inertgas geflutet.

In einer weiteren Variante des erfindungsgemäßen Schmelzofens weisen die Elektrodenschäfte eine integrierte Kühlung, z.B. einen Wasserkühlkreislauf auf, der gegebenenfalls die Elektroden bis unterhalb der Oberfläche der Schmelze kühlt.

Der erfindungsgemäße Schmelzofen kann zusätzlich mit einem grundsätzlich bekannten Vorerhitzer ausgestattet sein. Als Vorerhitzer kommen einerseits Gasbrenner oder auch elektrische Widerstands- oder Strahlungsheizungen in Frage.

Der Widerstandsschmelzofen gemäß der Erfindung ist anwendbar für die Verglasung der verschiedensten Rohstoffe. Er eignet sich ebenso zur Herstellung von Glas oder anderen Silikatverbindungen, wie auch von Email und Keramik oder zur Verglasung von Abfällen.

Der Ofen eignet sich besonders für die Produktionsmengen von 100 bis 1000 kg/h, wenn sehr verschiedene Produkte in kleinen Mengen, d.h. in kurzen Produktionsläufen hergestellt werden müssen, z.B. bei Gemengen zwischen 2 und 20 Tonnen bei häufigem Produktwechsel.

Der erfindungsgemäße Schmelzofen kann kontinuierlich oder diskontinuierlich betrieben werden. Der Zutritt von unerwünschter Falschluft von außen zum Schmelzofenraum ist gering beim erfindungsgemäßen Schmelzofen.

Wenn der Abstand der Elektroden im laufenden Betrieb verändert werden kann, so ist es möglich, den Widerstand des Schmelzbades so zu verändern, daß für jede Rohstoffmischung ein optimaler Betriebsstrom bzw. eine optimale Betriebsspannung eingestellt werden kann. Ein optimaler Betriebstrom wird erreicht bei maximalem Energieeintrag in die Schmelze ohne lokale Überhitzung der Schmelze.

Der Schmelzepegel der Schmelzwanne kann durch die bevorzugte vertikale Elektrodenverstellung z.B. bei exzentrischer Elektrodengeometrie der jeweiligen Verweilzeit des Schmelzgutes und der Produktionsgeschwindigkeit angepaßt werden.

Der Durchmesser und die Länge der Elektroden können verändert werden um dem optimalen Schmelzpegel zu entsprechen.

Der Schmelzofen kann insbesondere mit Minimalmengen an Schmelze elektrisch angefahren werden, wenn die Elektrodenhöhe verstellbar ist.

Da die Eintauchtiefe der Elektroden im Betrieb einstellbar ist, kann die Wärmeabgabe und der Bodenabstand der Elektroden optimiert werden. Beim Anfahren oder bei vollständiger Entleerung (Produktwechsel) wird die erste Schmelze z.B. durch Strahlung erzeugt.

Die Schmelzwanne des erfindungsgemäßen Schmelzofens ist drehbar aufgestellt. Hierdurch entsteht eine optimale Wärmeverteilung in der Schmelze. Ein weiterer Vorteil ist eine sehr gute Energieabgabe von der Elektrode, was eine lokale Überhitzung der Schmelze, der Elektroden oder der Ofenwand verhindert. Dieses ist wichtig für die Produktqualität und die Lebensdauer der Elektroden und der hochtemperaturbeständigen Wand des Ofens.

Gegenüber den bekannten Schmelzofenkonstruktionen ergeben sich insbesondere folgende Vorteile des erfindungsgemäßen elektrischen Widerstandsschmelzofens.

Die bei laufenden Betrieb veränderliche Elektrodengeometrie ermöglicht sehr große Flexibilität bei dem Schmelzen von verschiedensten Rohstoffen.

Die drehbar aufgestellte Schmelzwanne in Kombination mit den feststehenden Deckenelektroden gewährleistet eine optimale Temperatur- und Wärmeverteilung in der Schmelze. Die Vermeidung von lokalen Überhitzungen verringert die Gefahr von unkontrollierten physikalischen und chemischen Prozessen an Produkt, Elektroden und Feuerfestauskleidung des Ofens.

Die radial bewegliche Eintragsschnecke läßt zusammen mit der Drehbewegung der Wanne eine optimale Badabdeckung zu. Bei ungleichmäßigem Abschmelzen des Rohstoffpelzes kann über dieses System, wie beschrieben, leicht eine Korrektur der Bedeckung durchgeführt werden. Möglicherweise aus der Schmelze entweichende flüchtige Stoffe sind hierdurch optimal zurückzuhalten. Hierdurch wird eine konstante Produktzusammensetzung und ein umweltfreundlicher Schmelzprozeß gewährleistet.

Das Konzept der Eintragsschnecke garantiert einen minimalen Zutritt von Falschluft zum Ofenraum.

Die Form der Wanne ermöglicht in einer bevorzugten Ausführung mit steigenden Neugungswinkel des Wannenbodens in Richtung Auslaß einen sehr guten Leerlauf. Zusammen mit den über dem Boden drehenden Elektroden wird eine Ablagerung von Schmelzeanteilen verhindert.

Das günstige Verhältnis zwischen Badquerschnitt und Tiefe ruft eine eindeutige Kolbenströmung hervor. Hierdurch wird die Homogenität der Schmelze verbessert.

Die bereits genannte Ofengeometrie bringt eine kleine Fläche im Verhältnis zum Volumen mit sich. Hieraus folgen ein geringer Wärmeverlust und ein geringer spezifischer Verschleiß.

Bei Produktumstellung wird der Ofen vollkommen entleert, so daß beim Produktwechsel mit sehr geringer Verunreinigung des neuen Produktes zu rechnen ist. Die Deckenelektroden können aus dem Ofen gefahren werden, um Beschädigungen bei der Erzeugung der Startschmelze mittels Strahlungsheizung zu verhindern.

Bei Kontaminationsgefahr oder Reparatur kann die Wanne einfach und kostengünstig ausgetauscht werden.

Die Erfindung wird anhand der Figuren nachfolgend beispielhaft näher erläutert. Es zeigen:
- Fig. 1: Einen schematischen Querschnitt durch einen erfindungsgemäßen Schmelzofen.
- Fig. 2: Eine Variante zu dem Ofen nach Fig. 1, die anstelle eines Brenners als Vorerhitzer eine Strahlungsheizung aufweist.

Die um die vertikale Achse drehende Wanne 1 wird durch angetriebene Räder 2 oder einen angetriebenen Drehkranz unterstützt. Die Wände 22 der Wanne sind mit Feuerfestmaterial ausgemauert und isoliert. Die Wannenaußenseite kann auch gekühlt werden, um nach dem "Glas in Glas"-Prinzip zu schmelzen. Eine Energieführungskette 13 ermöglicht die Zufuhr von eventuell erforderlichen Medien an der z.B. hin und her drehenden Wanne 1. Die Wanne ist für Reparaturzwecke absenkbar gestaltet.

Der Oberofen 4 ist stationär und an der Stahlkonstruktion 12 aufgehängt. In diesem Teil sind folgende Öffnungen vorgesehen: Durchgänge für Deckenelektroden 5, 6, ein Kaminanschluß (nicht gezeichnet), der Brenner 11 für die Aufwärmung oder für die Erzeugung der Anfangsschmelze, Schaulöcher, Füllstandsmesser und Temperaturmesser (nicht gezeichnet). An der Seite des Schmelzofens ist eine Öffnung 24 für die verfahrbare Einlegeschnecke 16 vorgesehen.

Zwischen stationärem Oberteil 4 und der drehbaren Wanne 1 ist eine Abdichtung 14 angebracht.

Die Elektrodenhalter 5 sind drehbar in dem heb- und senkbaren Rahmen 17 aufgehängt. Der Ausleger 23 ermöglicht eine radiale Einstellbewegung der Elektroden 6. Die Bewegung der Elektroden 6 verläuft synchron. Die drei Elektroden können über eine Hebeeinrichtung 8 gemeinsam in der Höhe verstellt werden, um eine optimale Position in der Schmelze zu erreichen. Die Elektroden 6 können auch in die Dachnischen 18 zurückgezogen werden, z.B. bei einer Produktumstellung.

Bei Elektrodenwechsel werden die Elektroden über den Oberofen 4 herausgezogen.

An jedem Elektrodenhalter ist ein Strom- 9 und ein Kühlwasseranschluß 10 vorgesehen. Der Elektrodenhalter ist bis an die Elektrode 6 gekühlt. Die Größe der Elektroden ist an die Schmelzbedingungen und die Badtiefe anpaßbar.

Die radial aufgestellte Eintragsschnecke 16 kann über einen Längsantrieb und Längsführungen im Oberofen ein- und ausgeschoben werden. Diese Schnecke 16 ist über eine flexible Kupplung 15 und eine flexible Schnecke (nicht gezeichnet) an einem nicht gezeichneten festen Rohstoffsilo angeschlossen.

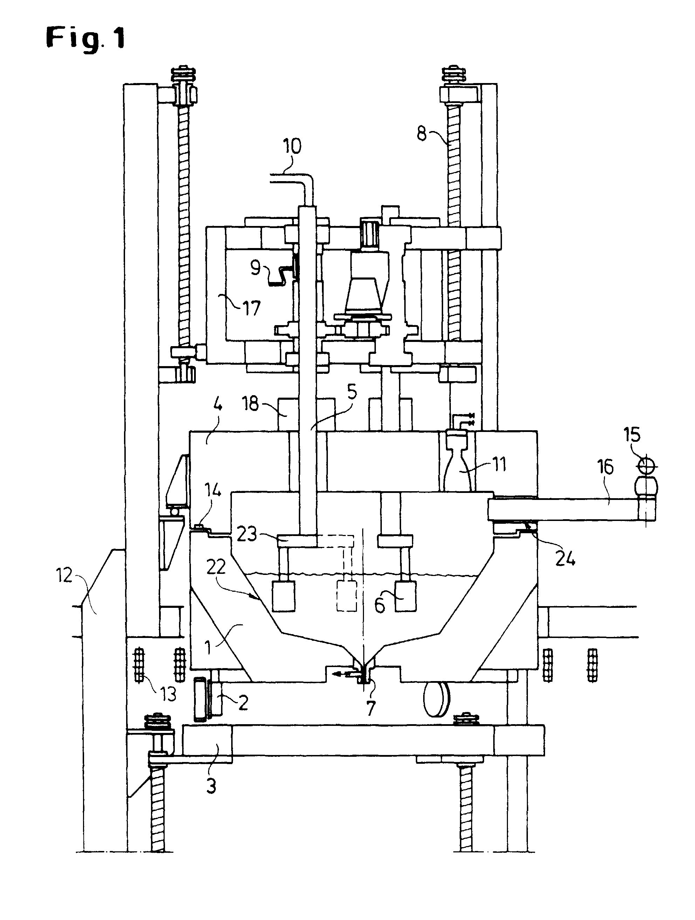

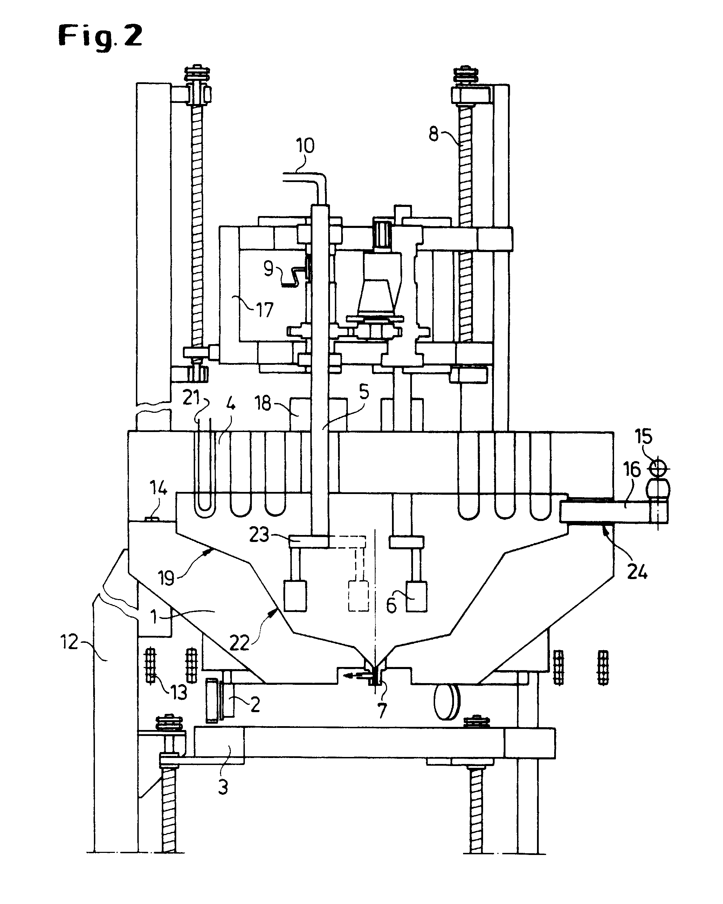

Fig. 2 zeigt eine alternative Bauform zu dem Widerstandsschmelzofen entsprechend Fig. 1. Der Brenner 11 zur Aufwärmung vom Ofen und zur Erzeugung der Anfangsschmelze ist durch Strahlungsrohre 21 ersetzt. Um eine größere Abschmelzfläche bei der Strahlungsbeheizung beim Anfahren des Schmelzofens zu erreichen, ist eine konzentrische Zone mit einer flacheren Bodenfläche 19 in der Wanne 1 angebaut. Diese Ringfläche 19 wird mittels der radial verfahrbaren Schnecke 16 dünnschichtig belegt.

Der kalte Schmelzofen wird mittels der Strahlungsrohre 21 oder eines Brenners 11 entsprechend Fig. 1 auf Betriebstemperatur gebracht. Der Auslauf 7 wird verschlossen. Mit der verfahrbaren Schnecke 16 werden Rohstoffe auf die Bank 19 oder in die Wanne 1 gestreut. Die erzeugte Schmelze läuft in das konische Unterteil der Wanne 1. Wenn ausreichend Schmelze entstanden ist, werden die Elektroden 6 in die Schmelze eingetaucht. Der Brenner 11 oder die Strahlungselemente 21 werden abgestellt. Jetzt werden die Rohstoffe auf die blanke Schmelze verteilt, und als "Cold Top" mit Widerstandsheizung weitergeschmolzen. Das Bad hat jetzt eine minimale Höhe. Mit zunehmender Badhöhe werden die Elektroden 6 angehoben um eine optimale Höhe im Bad einzunehmen. Bei Erreichen der maximalen Füllung wird der Bodenauslaß 7 um einen bestimmten Betrag geöffnet. Von da an wird ein Gleichgewicht zwischen Rohstoffeintrag und Produktaustrag eingehalten.

Bei Produktumstellung wird das Badniveau mit oder ohne Rohstoffabdeckung abgesenkt und die Elektroden werden heruntergefahren. Nach Erreichen der Minimalstellung wird auf neuen Rohstoff umgestellt. Hierdurch wird nur eine Minimalmenge Übergangsprodukt erzeugt.

Eine andere Umstellmethode ohne Produktverlust ist ebenfalls möglich. Auch hier werden Schmelzepegel und Elektroden 6 abgesenkt bis in die untere Stellung. Anschließend werden die Elektroden in die Dachnischen 18 zurückgezogen. Wenn erforderlich, wird mit Hilfe der Strahlungsrohre oder der Brenner die Wanne entleert. Dann kann, wie bereits oben beschrieben, die Wanne erneut gefüllt werden.

## Patentansprüche

1. Elektrischer Widerstandsschmelzofen für verglasbare Zusammensetzungen aufweisend wenigstens eine Schmelzwanne (1), einen stationären Oberofen (4), Deckenelektroden (6), einen Kaminanschluß, einen Vorerhitzer (11) für das Schmelzgut, eine Eintragseinheit (16) und einen Auslaß (7) für die Schmelze, dadurch gekennzeichnet, daß die Schmelzwanne (1) um eine vertikale Achse drehbar gelagert ist und daß der Oberofen (4) und die Schmelzwanne (1) voneinander in vertikaler Richtung trennbar sind.

2. Widerstandsschmelzofen gemäß Anspruch 1, dadurch gekennzeichnet, daß die Schmelzwanne (1) einen regelbaren Bodenablaß (7) aufweist, der insbesondere am tiefsten Punkt der Wanne (1) angebracht ist.

3. Widerstandsschmelzofen nach den Ansprüchen 1 bis 2, dadurch gekennzeichnet, daß die Anschlüsse der Elektroden (6), die Eintragseinheit (16) oder ein Kaminanschluß am stationären Oberofen (4) angebracht sind.

4. Widerstandsschmelzofen nach den Ansprüchen 1 bis 3, dadurch gekennzeichnet, daß die Eintragseinheit (16) als Förderschnecke ausgebildet ist, deren Förderende radial zur Drehachse der Schmelzwanne (1) beweglich ist.

5. Widerstandsschmelzofen gemäß den Ansprüchen 1 bis 4, dadurch gekennzeichnet, daß die Elektroden (6) des Schmelzofens jeweils, insbesondere über einen Ausleger (23), um eine vertikale Achse schwenkbar ausgeführt sind.

6. Widerstandsschmelzofen nach den Ansprüchen 1 bis 5, dadurch gekennzeichnet, daß die Elektroden (6) in vertikaler Richtung beweglich sind, aus dem Schmelzofen herausziehbar und bezüglich ihrer Höhe einstellbar sind.

7. Widerstandsschmelzofen nach den Ansprüchen 1 bis 6, dadurch gekennzeichnet, daß der Ofen oberhalb des Oberofens (4) eine hochtemperaturbeständige Kammer (18) mit eventueller Inertgasflutung aufweist.

8. Widerstandsschmelzofen gemäß den Ansprüchen 1 bis 7, dadurch gekennzeichnet, daß die Schäfte (5) der Elektroden (6) eine integrierte Kühlungsvorrichtung aufweisen, die insbesondere bis unter die Oberfläche der Schmelze reicht.

9. Widerstandsschmelzofen gemäß den Ansprüchen 1 bis 8, dadurch gekennzeichnet, daß der Ofen mit einem zusätzlichen Vorerhitzer (21) ausgestattet ist, insbesondere einem Gasbrenner (11) oder einer elektrischen Widerstands- oder Strahlungsheizung (21).

## Claims

1. An electrical resistance melting furnace for vitrifiable compositions, comprising at least one melting end (1), a stationary top furnace (4), overhead electrodes (6), a chimney port, a preheater (11) for the material to be melted, a filling unit (16) and an outlet (7) for the melt, characterized in that said melting end (1) is supported for rotation about a vertical axis and that said top furnace (4) and said melting end (1) can be separated from each other in vertical direction.

2. The resistance melting furnace according to claim 1, characterized in that said melting end (1) has a controllable bottom drain (7), in particular one which is arranged at the bottommost point of said melting end (1).

3. The resistance melting furnace according to claims 1 to 2, characterized in that the connectors of said electrodes (6), said filling unit (16) or a chimney port are arranged at said stationary top furnace (4).

4. The resistance melting furnace according to claims 1 to 3, characterized in that said filling unit (16) is designed as a screw conveyor the conveying end of which can be moved radially to the rotational axis of said melting end (1).

5. The resistance melting furnace according to claims 1 to 4, characterized in that each of said electrodes (6) of the melting furnace is designed for swinging about a vertical axis, especially via an extension arm (23).

6. The resistance melting furnace according to claims 1 to 5, characterized in that said electrodes (6) can be moved in vertical direction, withdrawn from the melting furnace and adjusted in height.

7. The resistance melting furnace according to claims 1 to 6, characterized in that said furnace has, above said top furnace (4), a refractory chamber (18) with an optional inert gas flooding means.

8. The resistance melting furnace according to claims 1 to 7, characterized in that the shafts (5) of said electrodes (6) have an integrated cooling device, in particular one which extends to below the surface of the melt.

9. The resistance melting furnace according to claims 1 to 8, characterized in that said furnace is equipped with an additional preheater (21), especially a gas burner (11) or an electrical resistance or radiation heater (21).

## Revendications

1. Four électrique de fusion par résistance pour des composés vitrifiables, comprenant au moins une cuve de vitrification (1), un four supérieur (4) stationnaire, des électrodes supérieures suspendues (6), un raccord de cheminée, un élément de préchauffage (11) pour le produit à faire fondre, une unité de chargement (16) et une sortie (7) pour le bain de fusion, **caractérisé** en ce que la cuve de vitrification (1) est montée de manière rotative autour d'un axe vertical, et en ce que le four supérieur (4) et la cuve de vitrification (1) peuvent être séparés l'un de l'autre dans la direction verticale

2. Four de fusion par résistance selon la revendication 1, **caractérisé** en ce que la cuve de vitrification (1) présente un écoulement de fond (7) réglable, qui est notamment placé au point le plus bas de la cuve (1).

3. Four de fusion par résistance selon les revendications 1 à 2, **caractérisé** en ce que les raccords de connexion des électrodes (6), l'unité de chargement (16) ou un raccord de cheminée sont placés sur le four supérieur (4) stationnaire.

4. Four de fusion par résistance selon les revendications 1 à 3, **caractérisé** en ce que l'unité de chargement (16) est réalisée en tant que vis sans fin de transport, dont l'extrémité de transport est mobile radialement par rapport à l'axe de rotation de la cuve de vitrification (1).

5. Four de fusion par résistance conforme aux revendications 1 à 4, **caractérisé** en ce que les électrodes (6) du four de fusion sont chacune d'une configuration pivotante autour d'un axe vertical, notamment par l'intermédiaire d'un bras (23).

6. Four de fusion par résistance selon les revendications 1 à 5. **caractérisé** en ce que les électrodes (6) sont mobiles dans la direction verticale, peuvent être extraites du four de fusion, et sont réglables quant à leur hauteur.

7. Four de fusion par résistance selon les revendications 1 à 6, **caractérisé** en ce que le four, au-dessus du four supérieur (4) présente une chambre (18) résistant aux hautes températures, avec un éventuel remplissage de gaz inerte.

8. Four de fusion par résistance conforme aux revendications 1 à 7, **caractérisé** en ce que les tiges de support (5) des électrodes (6), présentent un dispositif de refroidissement intégré, qui s'étend notamment jusqu'en-dessous de la surface supérieure du bain de fusion.

9. Four de fusion par résistance conforme aux revendications 1 à 8, **caractérisé** en ce que le four est équipé d'un élément de préchauffage (21) additionnel, notamment d'un brûleur à gaz (11) ou d'un chauffage électrique par résistance ou rayonnement (21).
